# EUROPEAN PATENT SPECIFICATION

(11) **EP 1 698 814 B1**
(45) Date of publication and mention of the grant of the patent: **06.08.2008**
(21) Application number: 04805076.9
(22) Date of filing: 01.12.2004
(51) Int. Cl.: F16K 17/02, A47J 27/092

(54) **PRESSURE COOKER CONTROL VALVE**
STEUERVENTIL FÜR DAMPFKOCHTOPF
VALVE DE REGULATION D'UN AUTOCUISEUR

(30) Priority: 15.12.2003 ES 200302884 U
(43) Date of publication of application: 06.09.2006
(73) Proprietor: FAGOR, S.COOP., 20500 Mondragon (Gipuzkoa) (ES)
(72) Inventor: BERGARA AZPIROTZ, Anartz, E-20120 LAZKAO (Gipuzkoa) (ES)
(74) Representative: Igartua, Ismael
(86) International application number: PCT/ES2004/000533
(87) International publication number: WO 2005/057063

(56) References cited:
- EP-A1- 0 736 282
- EP-A1- 1 008 320
- DE-A1- 3 134 804
- US-A- 5 370 257

## Description

The present invention relates to a valve for regulating the steam pressure in a pressure cooker, the sealing member of the valve being loaded by means of the compression of a prestressed regulating spring for the pressure limit setting.

### Prior art

A pressure regulating valve in a pressure cooker is disclosed in FR-2455875, of the rotary control type for regulating two pressure values in the cooker, and provided with a valve body with a valve sealing member overcoming the opposing force of a prestressed spring, and a duct for the discharge of a flow of steam to the atmosphere via an outlet opening. This known valve comprises a lug-cam mechanism for the prior compression of the regulating spring, actuated by a rotary control. A drawback of this known valve is that, being provided with a pressure gauge, the steam from the cooker has to be discharged via a side opening in the valve, and the discharge duct is the narrow gap between the valve body and the guide bushing for its axial movement, which eventually becomes clogged with the dirt borne by the steam. A further disadvantage of the known valve is that it has a very heavy sealing member and all the pressure for raising the valve body impinges below the surface of the actual sealing member.

A valve known since the publication of EP-1008320-A (ES-9803104-U) is built with a rotary valve engaged in a valve receptacle, a cylindrical cam-bush that houses a pressure regulating spring and which is coupled to the rotary control for prestressing the spring, and a sealing member of the type that rises, pressed for closure up against a valve seat built on a metal pressure intake inserted in the lid of the cooker. In this known valve the steam pressure impinges on a diaphragm of the sealing member in order to raise it, and the discharge outlet is a side opening in the valve.

DE-3134804-A discloses a valve for regulating the pressure on a pressure cooker according to the preamble of claim 1.

### Disclosure of the invention

The object of the invention is a valve for regulating the pressure on a pressure cooker, provided with a valve body and a sealing member which rises for the release of a jet of steam while maintaining the pressure constant in the cooker, and a central duct for discharging the steam in the cooker, wherein the pressure control means and the steam discharge duct are coaxial with a central valve axis.

The valve according to the invention is defined in the claim and resolves the known problem of the clogging of the valve body lifting guide on account of the dirt accompanying the discharged steam, by means of a large-section central duct which runs through the interior of the valve body and the regulating means, as far as an outlet opening in the rotary control. At the same time the invention resolves the problem of the vibration and noise of the valve body during discharge, since thrust forces unbalanced due to the turbulence of the steam jet discharged impinge on the surface of the bottom of the valve body when the sealing member is raised. To achieve balance in the distribution of the two opposing forces, the force of the prestressed spring and the valve body lifting force due to the flow of discharged steam, the invention offers a special prestressed regulating spring and valve body construction with combined discharge openings in order to eradicate the vibration and the associate noise during steam release.

### Description of the drawings

Figure 1 is a sectional view of a pressure regulating valve on a pressure cooker.
Figure 2 is a close view of the valve in figure 1, showing the valve body raised during steam release.

### Detailed description of an embodiment of the invention

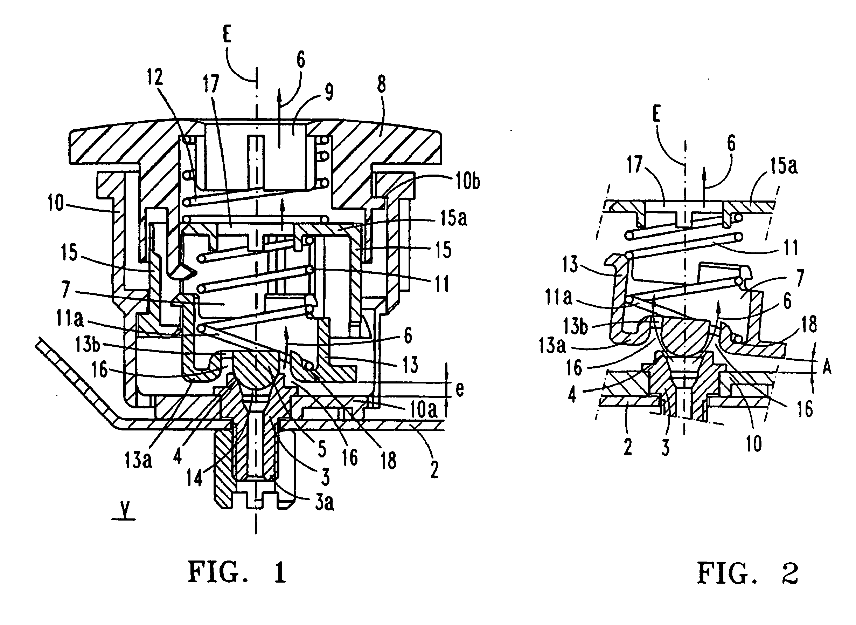

In reference to figures 1-2, a preferred embodiment of the release pressure regulating valve 1 according to the invention is adapted for its installation on the lid of a pressure cooker by means of a pressure intake 3 in the form of a metal nozzle, the outer end of which is inserted in the cooker steam volume V. The opposite end of the intake is machined with a sealing seat 4 and a valve hole 14. A round-shaped sealing member 5 rests on the sealing seat 4 under the pressure of a prestressed regulating spring 11, and the valve hole 14 is kept closed until a steam overpressure is reached in the cooker. The sealing member 5 is kept raised from its seat 4, allowing a sufficient flow of steam 6 to escape while the pressure in the volume regulating V is kept constant.

A cylindrical-shaped valve body 13 is coupled to a cam-bush 15 forming a chamber 7 which houses the regulating spring 11, all of them coaxial with the valve axis E.

The round-shaped sealing member 5 is cast integral with a bottom base wall 13a of the valve body 13, standing slightly proud from it in order to penetrate in the valve hole 14. To maintain a constant cooking pressure or for depressurizing the cooker, valve 4-5 opens to release a jet of steam 6 to the atmosphere, which runs along a path in the axial direction through said housing chamber 7 and a central opening up in the rotary control 8 of the valve 1.

The pressure regulating valve 1 is built with a cylindrical-shaped outer receptacle 10, at the bottom wall 10a of which the pressure inlet 3 is attached. Said bottom wall 10a of the valve receptacle is in a horizontal position, transversely to the vertical axis E of the valve 1. The rotary control 8 has a shoulder engaged in the opening of the valve receptacle 10 and it is retained by the upward force exerted by a spring 12 against an annular projection 10 b of the receptacle.

The rotary control 8 is coupled to the cylindrical cam-bush 15, which is displaced axially by means of a cam-lug mechanism not shown in the drawings, compressing the regulating spring 11 up to a pre-set rating force. Two pressure values relative to cooking are possible, for instance 0.55 and 1.05 bar, matching up with two positions on the rotary control 8.

The cam-bush has a transverse wall 15a, against which the upper end of the regulating spring 11 rests, and a central outlet opening 17 for the steam jet 6. The lower end of the spring 11 rests on the base wall 13a of the valve body around the sealing member 5. In a specimen embodiment the regulating spring 11 is a straight helical one and is guided coaxially with a wide clearance in the housing chamber 7 between the cam-bush 15 and the valve body 13. The base wall 13a of the valve body has several radial sealing member 5 attach arms 13b, which form between them different openings 16 for the outflow of steam 6, adjacent to the valve hole 14 and spread over a circular area around the sealing member 5.

The base wall 13a of the valve body is separated by a space "e" from the bottom plane 10a of the valve receptacle, which permits its lateral swivelling when it is raised. The last coil 11a of the regulating spring is inclined in relation to a diametral plane of the valve body 13, so the spring 11 rests on a pointwise or arched area 18 located to one side of the area of said outlet openings 16 on the surface of the base wall 13a, offset in relation to the axis E. During the release of the steam jet 6, as shown in figure 2, the position acquired by the raised body 13 is asymmetrical in relation to the axis E because the offset of the area 18 in the base wall 13a for resting the end coil 11a of the regulating spring, creates a degree of freedom for the lateral swivelling of the valve body 13, the latter being tilted with an angle of inclination A in relation to the plane of the outer wall 10a of the valve receptacle. During the release of steam 6 the valve body 13 having the integral sealing member adopts a stable position relative to the valve axis E, due to the equilibrium produced by this inclination A of the valve body 13 in the distribution of opposing forces that impinge on the base wall 13a, the upward pressure force of the steam flow 6 around the sealing member 5 and the downward force of the prestressed regulating spring 11. The valve body 13 is held in this state without oscillation irrespective of whether its bottom wall 13a makes contact or not with the outer bottom wall 10a of the valve receptacle or with the pressure intake 3, whereby the impact noise usually generated by the vibration of the sealing device during steam 6 release is prevented.

## Claims

1. Pressure cooker pressure regulating valve (1) of the type of valve that includes, a rotary control (8) for controlling the steam pressure coupled to an outer valve receptacle (10) provided with a central valve axis (E), a valve body (13) housed in said valve receptacle and provided with a valve sealing member (5) which is lifted under the overpressure of the steam in the cooker, a valve seat (4) and a valve hole (14) in communication with the volume (V) of steam in the cooker for the release of a jet of steam (6) through an outlet duct (7) to the atmosphere, and a prestressed regulating spring (11) which exerts a rated closing force on the sealing member (5) against the valve seat (4), wherein the valve body (13) takes the form of a cylindrical vessel housing the coaxial regulating spring (11), and includes a base wall (13a) with the sealing member (5) in its central zone, and the regulating spring (11) is provided with an end pressing on a resting area (18) on this base wall (13a) of the valve body (13), whereby the sealing member (5) is balanced between the opposing forces exerted by the steam jet (6) and the regulating spring (11) on said base wall (13a),
**characterised in that**
the base wall (13a) comprises several openings (16) around the sealing member (5), for the issue of said steam jet (6) towards the central outlet duct (7) coaxial with the axis (E), and
the end of the regulating spring (1) includes a terminal coil (11a) resting on a lateral area of the surface of the bottom wall (13a), so that it permits a degree of freedom for swivelling of the valve body (13) and the sealing member (5) therewith in a lateral direction in relation to the axis (E), the valve body (13) finding during the release of the steam jet (6) an inclined asymmetry position (A) in relation to the valve axis (E), balanced in respect of the opposing forces of the spring (11) and the steam jet (6).

## Patentansprüche

1. Schnellkochtopf-Druckregelventil (1) vom Ventiltyp mit einem Drehregler (8) zur Steuerung des Dampfdrucks in Verbindung mit einer äußeren Ventilaufnahme (10), versehen mit einer zentralen Ventilachse (E), einem Ventilgehäuse (13), untergebracht in der Ventilaufnahme und versehen mit einem Ventildichtglied (5), das unter Überdruck des Ventils im Topf angehoben wird, einem Ventilsitz (4) und einem Ventilloch (14) in Kommunikation mit dem Dampfvolumen (V) im Topf zur Freigabe eines Dampfstrahls (6) über eine Ableitung (7) an die Umgebung, sowie einer vorgespannten Reglerfeder (11), die eine Nennverschließkraft auf das Dichtglied (5) gegen den Ventilsitz (4) ausübt, wobei das Ventilgehäuse (13) die Form eines zylinderförmigen Gefäßes annimmt, in dem die koaxiale Reglerfeder (11) untergebracht ist, und eine Sockelwand (13a) mit dem Dichtglied (5) im mittleren Bereich enthält, und die Reglerfeder (11) mit einem Ende versehen ist, das auf einen Ruhebereich (18) an der Sockelwand (13a) des Ventilgehäuses (13) anliegt, wobei das Dichtglied (5) zwischen den entgegengesetzten Kräften des Dampfstrahls (6) und der Reglerfeder (11) an der Sockelwand (13a) ausbalanciert ist,
**dadurch gekennzeichnet, dass**
die Sockelwand (13a) verschiedene Öffnungen (16) um das Dichtglied (5) umfasst, für die Abgabe des Dampfstrahls (6) zur zentralen Ableitung (7), gleichachsig mit der Achse (E), und
das Ende der Reglerfeder (1) eine Abschlussspule (11a) umfasst, die auf der seitlichen Fläche der unteren Wand (13a) ruht, so dass eine gewisse Freiheit zum Ausschwenken des Ventilgehäuses (13) und des Dichtglieds (5) von dort in seitliche Richtung im Verhältnis zur Achse (E) besteht, wodurch das Ventilgehäuse (13) während der Freigabe des Dampfstrahls (6) eine asymmetrische, geneigte Lage (A) im Verhältnis zur Ventilachse (E), ausbalanciert bezüglich der entgegenwirkenden Kräfte der Feder (11) und des Dampfstrahls (6), einnimmt.

## Revendications

1. Régulateur de pression (1) d'un autocuiseur du genre comprenant une commande rotative (8) pour contrôler la pression de vapeur associé à un réceptacle de vanne extérieur (10) doté d'un axe central (E), d'un corps de vanne (13) contenu dans ledit réceptacle de vanne et doté d'un élément d'étanchéité (5) qui est soulevé sous l'effet de la surpression de la vapeur dans l'autocuiseur, d'un siège de vanne (4) et d'un trou (14) qui communique avec le volume (V) de la vapeur présente dans l'autocuiseur pour l'émission d'un jet de vapeur (6) via un conduit de sortie (7) vers l'atmosphère et un ressort régulateur précontraint (11) qui exerce une force d'obturation nominale sur l'élément d'étanchéité (5) appuyé contre le siège de vanne (4), où le corps de vanne (13) prend la forme d'un récipient cylindrique contenant le ressort régulateur coaxial (11) et qui inclut une paroi de pied (13a) avec l'élément d'étanchéité (5) placé dans sa zone centrale et le ressort régulateur (11) est doté d'une extrémité reposant sur une zone d'appui (18) de ladite paroi de pied (13a) du corps de vanne (13) où l'élément d'étanchéité (5) est équilibré entre les forces opposées exercées par le jet de vapeur (6) et le ressort régulateur (11) sur ladite paroi de pied (13a),
**caractérisé en ce que**
la paroi de pied (13a) comprend plusieurs ouvertures (16) autour de l'élément d'étanchéité (5) pour ledit jet de vapeur (6) vers le conduit de sortie central (7) qui est en position coaxiale par rapport à l'axe (E) et
l'extrémité du ressort régulateur (1) inclut une bobine de bornes (11a) reposant sur une zone latérale de la surface de la paroi de fond (13a), de manière à permettre au corps de vanne (13) de pivoter et à l'élément d'étanchéité (5) qui l'accompagne de se trouver dans un sens latéral par rapport à l'axe (E), le corps de vanne (13) occupant, pendant l'émission du jet de vapeur (6), une position inclinée asymétrique (A) par rapport à l'axe de la vanne (E), équilibré par rapport aux forces opposées générées par le ressort (11) et le jet de vapeur (6).
